(19) Europäisches Patentamt
European Patent Office
Office européen des brevets

(11) **EP 3 997 527 B1**

(12) **EUROPÄISCHE PATENTSCHRIFT**

(45) Veröffentlichungstag und Bekanntmachung des Hinweises auf die Patenterteilung:
**11.09.2024 Patentblatt 2024/37**

(21) Anmeldenummer: **20736663.4**

(22) Anmeldetag: **02.07.2020**

(51) Internationale Patentklassifikation (IPC):
**G05B 13/02** (2006.01)   **F04B 49/06** (2006.01)
**G05B 13/04** (2006.01)

(52) Gemeinsame Patentklassifikation (CPC):
**G05B 13/048; F03C 1/0686; F04B 1/295; F04B 1/324; F04B 49/002; F04B 49/065; F04B 49/12; G05B 13/024**

(86) Internationale Anmeldenummer:
**PCT/EP2020/068648**

(87) Internationale Veröffentlichungsnummer:
**WO 2021/004879 (14.01.2021 Gazette 2021/02)**

(54) **ECHTZEITFÄHIGE TRAJEKTORIENPLANUNG FÜR AXIALKOLBENPUMPEN IN SCHWENKSCHEIBENBAUWEISE UNTER SYSTEMATISCHER BERÜCKSICHTIGUNG VON SYSTEMBESCHRÄNKUNGEN**

REAL-TIME-CAPABLE TRAJECTORY PLANNING FOR PIVOTING-PLATE-TYPE AXIAL PISTON PUMPS WITH SYSTEMATIC CONSIDERATION OF SYSTEM LIMITATIONS

PLANIFICATION DE TRAJECTOIRES EN TEMPS RÉEL DESTINÉE À DES POMPES DE PISTONS AXIAUX EN CONSTRUCTION À PLATEAU ORIENTABLE AVEC PRISE EN COMPTE SYSTÉMATIQUE DE LIMITATIONS DE SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2019 DE 102019210003**

(43) Veröffentlichungstag der Anmeldung:
**18.05.2022 Patentblatt 2022/20**

(73) Patentinhaber: **Robert Bosch GmbH 70442 Stuttgart (DE)**

(72) Erfinder:
• **MUTSCHLER, Steffen 89233 Neu-Ulm (DE)**
• **TRACHTE, Adrian 70563 Stuttgart (DE)**
• **PASSENBERG, Carolina 71277 Rutesheim (DE)**
• **JOOS, Steffen 74399 Walheim (DE)**

(56) Entgegenhaltungen:
EP-A2- 2 392 979          DE-A1- 102013 208 869
DE-A1- 102014 224 337     DE-A1- 102015 222 988
US-A1- 2004 064 292

**EP 3 997 527 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Erzeugen einer vorgegebenen Beschränkungen genügender Sollwerttrajektorie für eine hydraulische Maschine.

Stand der Technik

Hydraulische Systeme bestehen typischerweise u.a. aus Komponenten wie Pumpen und Ventilen. Diese Komponenten unterliegen physikalischen Beschränkungen. So sind beispielsweise bei einem Magnetventil (d.h. einem elektrisch ansteuerbaren Solenoidventil) u.a. der Ansteuerstrom des Ventils sowie die Position des Ventilschiebers beschränkt. Diese Beschränkungen können in einem Modell als Zustands- und Stellgrößenbeschränkungen abgebildet werden. Für die Synthese von echtzeitfähigen regelungstechnischen Strukturen, wie Reglern oder Vorsteuerungen, wie sie insbesondere bei der Bedienung via Joystick oder Gaspedal benötigt werden, stellt das systematische Einhalten von Beschränkungen eine Herausforderung dar.

Eine Möglichkeit, systematisch Beschränkungen in einer Steuerung zu berücksichtigen ist die Anwendung der modellprädiktiven Regelung bzw. Steuerung (MPC), welche es außerdem ermöglicht, das hydraulische System hinsichtlich eines definierten Gütefunktionals optimal anzusteuern. MPC hat jedoch den Nachteil, dass in jedem Iterationsschritt ein Optimierungsproblem während der Laufzeit numerisch gelöst werden muss. Dies erfordert entweder entsprechend schnelle und teure (digitale) Hardwarekomponenten oder einen auf das konkrete MPC-Problem maßgeschneiderten Lösungsansatz, was einen entsprechend hohen Entwicklungs- und Implementierungsaufwand darstellt.

Um diese Nachteile zu vermeiden, kann zur echtzeitfähigen Steuerung von hydraulischen Systemen anstelle von MPC eine flachheitsbasierte Vorsteuerung mit einer entsprechenden Trajektorienplanung eingesetzt werden. Zur Realisierung der (nichtlinearen) flachheitsbasierten Vorsteuerung werden (stetig-differenzierbare) Trajektorien für den flachen Ausgang und dessen Zeitableitungen benötigt. Diese Trajektorien müssen in Echtzeit in Abhängigkeit von einem a-priori unbekannten (vom Anwender vorgegebenen) Referenzwert für die zu steuernde Größe geplant werden. Hierfür kann ein Tiefpassfilteralgorithmus, ein sog. 'Zustandsvariablenfilter', zum Einsatz kommen. Dies hat den Nachteil, dass physikalische und geometrische Beschränkungen nicht systematisch in der Trajektorienplanung berücksichtigt werden können und daher entweder eine nicht realisierbare oder suboptimale d.h. konservative Trajektorie generiert wird.

Die DE 10 2018 114 047 A1 beschreibt ein Verfahren zum Erzeugen einer Stellgrößentrajektorie für einen Aktor zur Beeinflussung einer Ausgangsgröße eines Systems, wobei ein Sollwert der Ausgangsgröße des Systems einer Trajektorienplanung zugeführt wird, welche aus dem Sollwert eine Trajektorie aus beschränkten Eingangswerten für eine Filterintegratorkette und eine Trajektorie aus flachen Sollzuständen erzeugt, wobei die Trajektorie aus beschränkten Eingangswerten und die Trajektorie aus flachen Sollzuständen einer flachheitsbasierten Vorsteuerung zugeführt werden, welche daraus die Stellgrößentrajektorie für den Aktor erzeugt, wobei in der Trajektorienplanung zum Erzeugen der Trajektorie aus beschränkten Eingangswerten wenigstens eine Beschränkung in Abhängigkeit von der Trajektorie aus flachen Sollzuständen angewandt wird.

DE 10 2014 224 337 A1 beschreibt ein Verfahren zur Steuerung eines hydrostatischen Antriebs, welcher eine Antriebsmaschine, eine mit der Antriebsmaschine gekoppelte hydraulische Pumpe und einen über einen hydraulischen Arbeitskreis mit der hydraulischen Pumpe gekoppelten hydraulischen Motor aufweist, wobei aus einem vorgegebenen Sollwert für wenigstens eine der Regelgrößen umfassend einen Druck im hydraulischen Arbeitskreis, eine Drehzahl der hydraulischen Pumpe und eine Ausgabegröße des hydrostatischen Antriebs im Zuge einer Vorsteuerung wenigstens eine von mehreren Stellgrößen des hydrostatischen Antriebs ermittelt und eingestellt wird, und wobei die übrigen Regelgrößen und/oder Stellgrößen automatisch nachgeführt werden.

DE 10 2013 208 869 A1 beschreibt ein Verfahren zur Regelung eines Drucks in einer Hochdruckleitung einer Kraftstoffversorgungseinrichtung eines Verbrennungsmotors, wobei Kraftstoff mittels einer Hochdruckpumpe aus einem Niederdruckbereich in die Hochdruckleitung gefördert wird, wobei wenigstens ein den Druck in der Hochdruckleitung beeinflussendes Stellglied mit einer Stellgröße angesteuert wird, wobei durch eine Regelung ein Reglerausgangswert auf Grundlage eines Sollwerts und eines rückgeführten Istwerts bestimmt wird und wobei durch eine Vorsteuerung ein Vorsteuerwert auf Grundlage des Sollwerts bestimmt wird, wobei die Stellgröße aus dem Reglerausgangswert und aus dem Vorsteuerwert bestimmt wird.

Die DE 10 2015 222 988 A1 betrifft ein Verfahren zum Regeln einer Drehzahl einer Antriebsmaschine in einem Antriebsstrang, der in verschiedenen Betriebsmodi und/oder Betriebszuständen betreibbar ist, insbesondere in einem Hybridantriebsstrang, der mindestens zwei unterschiedliche Antriebsmaschinen umfasst, mit Hilfe einer Drehzahlregelung einer Regelstrecke mit einer Stellgrößenbeschränkung. Um das Regelverhalten beim Regeln der Drehzahl zu verbessern, wird eine geplante Soll-Trajektorie modellbasiert korrigiert, sobald die Stellgrößenbeschränkung durch eine Vorsteuerung verletzt wird, wobei ein Ausgang der Vorsteuerung limitiert wird, sobald der Ausgang der Vorsteuerung die Stellgrößenbeschränkung überschreitet.

Offenbarung der Erfindung

Erfindungsgemäß werden ein Verfahren zum Erzeugen einer vorgegebenen Beschränkungen genügender Sollwerttrajektorie für eine hydraulische Maschine, insbesondere eine hydraulische Pumpe, weiter insbesondere in Schrägscheiben- oder Schrägachsenbauweise, sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschreibt einen allgemeinen Ansatz zur Echtzeit-Trajektorienplanung unter Berücksichtigung von Stell- und Zustandsgrößenbeschränkungen für nichtlineare Eingrößensysteme beliebiger Ordnung. Kern der Erfindung ist ein erweiterter Zustandsvariablenfilter für Sollwerte, wie z.B. den Förderdruck (Differenzdruck über die Pumpe), dessen Ausgang eine unter den vorhandenen Zustands- und Stellgrößenbeschränkungen realisierbare Trajektorie des Sollwerts und deren Ableitungen ist. Unter Verwendung dieser Trajektorie und deren wenigstens n Ableitungen, $n \geq 2$, und ggf. durch Inversion der Modellgleichungen kann beispielsweise eine dynamische Vorsteuerung oder eine Folgeregelung realisiert werden.

Bei dem Zustandsvariablenfilter wird in jedem Zeitschritt für jede k-te Beschränkung eine dynamische Grenze $\gamma_k$ (Maximal- und/oder Minimalwert) für die höchste (vorzugsweise zweite) Ableitung der Sollwerttrajektorie berechnet und prioritäts-basiert auf die höchste Ableitung aufgeschaltet, wenn diese Grenze über- bzw. unterschritten wird. Ist dies nicht der Fall, wird die Sollwerttrajektorie vorzugsweise über eine unbeschränkte, z.B. vom Anwender einstellbare, Filterdynamik gefiltert. Somit müssen in jedem Zeitschritt lediglich Modellgleichungen und eine Kaskade von Beschränkungsgliedern ausgewertet werden. Dies entspricht einer Echtzeit-Trajektorienplanung ohne numerische Echtzeitoptimierung unter Berücksichtigung von Beschränkungen der Stellgrößen (z.B. Ansteuerströme) und Zustände (z.B. Schwenkwinkel und Differenzdruck über die Pumpe).

Werden beispielhaft als untere und obere Zustandsbeschränkung derselbe Minimal- und Maximalwert für den Schwenkwinkel vorgegeben, werden diese Grenzen (oder eine weitere, höher priorisierte Beschränkung wie z.B. ein Minimal- und Maximalwert für den Differenzdruck) die unbeschränkte Planung überschreiben und es wird auf die vorgegebene Schwenkwinkel-Referenztrajektorie geplant. Eine Differenzdruck-Referenztrajektorie kann entweder über die unbeschränkte Planung vorgegeben werden oder, wie beim Schwenkwinkel, als obere und untere Zustandsbeschränkung. Diese Limitierungen (oder eine weitere, höher priorisierte Beschränkung wie z.B. ein minimal oder maximal zulässiger Schwenkwinkel) werden die unbeschränkte Planung überschreiben und es wird auf die vorgegebene Differenzdruck-Referenztrajektorie geplant. Somit erlaubt der Zustandsvariablenfilter in einem Ansatz, auf verschiedene Eingangsgrößen zu planen, solange sie als Zustands- oder Stellgrößenbeschränkung vorhanden sind.

Prinzipiell kann die Erfindung verallgemeinert für beliebige Trajektorienplanungsprobleme eingesetzt werden, bei denen die Regelstrecke als nichtlinear (eingangsaffines) Eingrößensystem mit Stell(raten)- und Zustandsgrößenbeschränkungen modelliert werden kann. Insbesondere bietet sich der beschriebene Ansatz für hydraulische Systeme mit mechanischen Anschlägen, wie sie bei Ventilen auftreten, an. Beispielsweise kann die Erfindung für die Schwenkwinkelverstellung von beliebigen Axialkolbenmaschinen in Schrägachsen- oder Schrägscheibenbauweise genutzt werden. Dabei kann die Winkelverstellung der Achse oder Scheibe beispielsweise druckgesteuert oder elektroproportional erfolgen. Eine Beispielanwendung ist die Nutzung für Fahrzeuge mit teilweiser oder vollständiger hydraulischer Leistungsübertragung über Axialkolbenmaschinen. Insbesondere kann die Erfindung für einen momentenbasierten Fahrantrieb, der das gewünschte Moment an den Rädern in eine gewünschte Druckdifferenz und einen abtriebsseitigen Schwenkwinkel umrechnet, oder für einen geschwindigkeitsgeführten Fahrantrieb, der die gewünschte Geschwindigkeit in einen antriebsseitigen Schwenkwinkel umrechnet, genutzt werden. Beide Konzepte können sowohl gesteuert als auch - z.B. bei Verwendung eines Schwenkwinkelsensors - geregelt erfolgen.

Die Erfindung erlaubt, ein solches hydraulisches System durch eine entsprechende Trajektorienplanung unter Einhaltung von Zustands- und Stellgrößenbeschränkungen möglichst schnell entlang einer vorgegebenen Referenztrajektorie zu führen. Die Referenztrajektorie kann hierbei beispielsweise als Schwenkwinkel oder als Differenzdruck über die Pumpe vorgegeben sein. Gleichzeitig werden zu jedem Zeitpunkt (insbesondere in den Transienten) die Beschränkungen des hydraulischen Systems eingehalten. Insbesondere wird neben der Stellgrößenbeschränkung (z.B. Beschränkung des Ansteuerstroms) die Beschränkung der Systemzustände (z.B. der Ventilschieber- und Kolbenposition und des Förderdrucks) systematisch in der Berechnung der Sollwerttrajektorie berücksichtigt. Dies hat den Vorteil, dass eine realisierbare Trajektorie berechnet werden kann, die nahe an (bzw. auf) der Beschränkung beispielsweise der maximal möglichen Verstellgeschwindigkeit liegt. Außerdem können über Zustandsbeschränkungen systematisch Sicherheitsgrenzen (z.B. hinsichtlich des Förderdrucks) abgebildet und eingehalten werden. Ein weiterer bedeutender Vorteil ist die Möglichkeit zu beeinflussen, wie hart bzw. weich die Trajektorie in die Zustandsbeschränkungen geplant wird. So lassen sich beispielsweise harte Anschläge vermeiden, was je nach Anwendung den Bauteilverschleiß (z.B. von Ventilen) deutlich reduzieren kann. Weiterhin ist vorteilhaft, dass die beschränkte Trajektorie (bei hinreichend exakter Vorsteuerung) eine realistische Auskunft über den aktuellen Systemzustand liefert. Diese Information kann beispielsweise für übergeordnete Diagnosefunktionen verwendet werden, solange sichergestellt ist, dass die Axialkolbenmaschine fehlerfrei arbeitet. Der Echtzeit-Rechenaufwand des verwendeten Vorsteuerkonzepts fällt dabei sehr gering aus und kommt insbesondere ohne numerische Echtzeitoptimierung aus.

Der beschriebene Ansatz bietet sich generell für mobile Arbeitsmaschinen, im Speziellen mit Bedarf einer Kombination aus Druckregelung und Schwenkwinkelsteuerung für die Pumpe, an. Dies sind unter anderem Radlader, Telehandler, Kommunalfahrzeuge, und Stapler. Es betrifft jedoch auch Drehwerksantriebe im geschlossenen Kreis sowie Windenantriebe für Krane, Schiffe und Geländefahrzeuge.

Eine erfindungsgemäße Recheneinheit, z.B. ein Steuergerät eines Ventils, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung

Figur 1    zeigt schematisch eine Axialkolbenmaschine mit der ein erfindungsgemäßes Verfahren durchführbar ist.

Figur 2    zeigt eine Prinzipstruktur der flachheitsbasierten Vorsteuerung in Kombination mit dem erweiterten Trajektorienfilter zur echtzeitfähigen Steuerung von hydraulischen Systemen am Beispiel der Steuerung des Förderdrucks einer Axialkolbenmaschine in Schrägscheibenbauweise.

Figur 3    zeigt eine qualitative Gegenüberstellung verschiedener Trajektorien für die zu steuernde Größe, einen internen beschränkten Systemzustand sowie die Stellgröße.

Detaillierte Beschreibung der Zeichnung

Die Erfindung beschreibt einen allgemeinen Ansatz zur Echtzeit-Trajektorienplanung unter Berücksichtigung von Stell- und Zustandsgrößenbeschränkungen für nichtlineare Eingrößensysteme beliebiger Ordnung. Dieser neue Ansatz eignet sich insbesondere für hydraulische Systeme und wird exemplarisch zur Steuerung einer Schrägscheiben-Axialkolbenmaschine (AKM) mit Drucksteuerung des Schwenkwinkels angewandt.

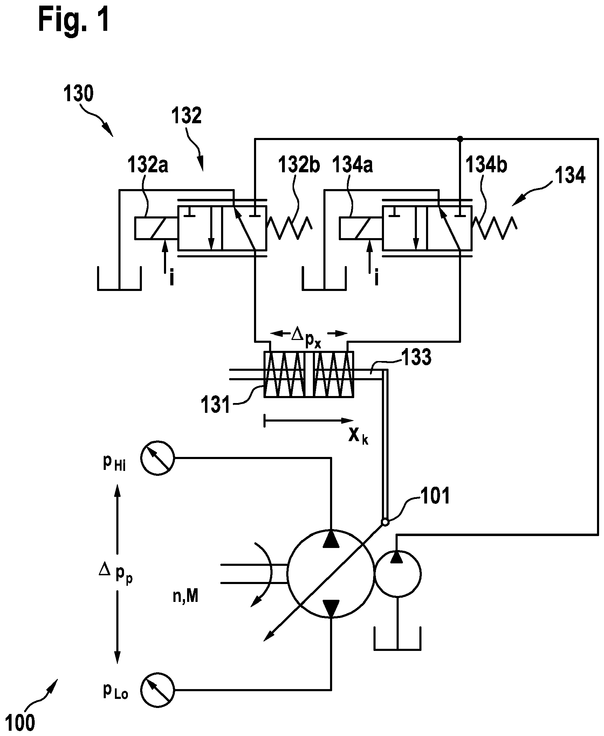

In Figur 1 ist schematisch eine Axialkolbenmaschine 100, beispielsweise in Schrägscheiben- oder Schrägachsenbauweise, mit einer Verstelleinrichtung 130 dargestellt. Ein Schwenkwinkel der Axialkolbenmaschine ist mittels der Verstelleinrichtung 130 einstellbar, wobei über die Einstellung des Schwenkwinkels das Förder- bzw. Schluckvolumen eingestellt werden kann. Die Axialkolbenmaschine 100 kann sowohl als Motor als auch als Pumpe mit einer Drehzahl $n$ und einem Drehmoment $M$ betrieben werden. Die Axialkolbenmaschine ist mit einer Hochdruckseite $p_{Hi}$ und einer Niederdruckseite $p_{Lo}$ verbunden und einer Druckdifferenz $\Delta p_p$ ausgesetzt. Bei einer Ausführung als Pumpe stellt die Druckdifferenz $\Delta p_p$ den Förderdruck und eine Ausgangsgröße der Pumpe dar.

Der Schwenkwinkel kann mittels der Verstelleinrichtung 130 verstellt werden. Die Verstelleinrichtung 130 umfasst hier einen Verstellzylinder 131, der mit seinem Kolben 133 beispielsweise an einer Schwenkwiege 101 der Axialkolbenmaschine 100 angreift. Eine Position des Kolbens ist mit $x_K$ bezeichnet. Der Kolben ist einer Druckdifferenz $\Delta p_x$ ausgesetzt, die mittels zweier elektroproportionaler Ventile 132, 134 einstellbar ist. Die Position $x_k$ des Kolbens 133 im Verstellzylinder 131 stellt die Ausgangsgröße der Verstelleinrichtung 130 dar.

Die elektroproportionalen Ventile 132, 134 weisen jeweils eine Spule bzw. einen Elektromagneten 132a, 134a auf, der mit einem Strom i versorgt wird, und einer Rückstellfeder 132b, 134b, die zur Veränderung einer Ventilschieberposition dienen.

Die beiden Druckregelventile 132, 134, die die Verstellzylinderposition $x_k$ bestimmen, werden zweckmäßigerweise als ein Ventil betrachtet. Dazu wird ein Ventil so bestromt, das kein Durchfluss entsteht, während auf das andere der berechnete Ansteuerstrom / aufgeschaltet wird. Eine notwendige Umrechnung von einem Ansteuerstrom / auf die beiden Ventile erfolgt außerhalb des erweiterten Zustandsvariablenfilters. Es wird im Folgenden daher von einem Ventil mit Ansteuerstrom $I$ ausgegangen. Besitzen die Druckregelventile 132, 134 eine deutlich schnellere Dynamik als der Verstellzylinder, stehen die Ventilschieberposition $x_v$ und der Ansteuerstrom $I$ in Abhängigkeit von der Druckdifferenz $\Delta p_x$ über die Ventile über eine statische Kräftebilanz (1) in algebraischem Zusammenhang.

$$F_m(I) + F_f(x_v) + F_{jet}(x_v;\Delta p_v) + F_p(\Delta p_v) = 0; \tag{1}$$

wobei $F_m(I)$ eine Magnetkraft, $F_f(x_v)$ eine Rückstellfederkraft, $F_{jet}(x_v; \Delta p_v)$ eine Strömungskraft und $F_p(\Delta p_v)$ eine Druckkraft beschreibt. Diese Kräfte können beispielsweise über nichtlineare Funktionszusammenhänge oder Kennfelder in Abhängigkeit von den Eingangsgrößen angesetzt werden. $\Delta p_v$ beschreibt die Druckdifferenz über die Ventile und ist wie folgt definiert:

$$\Delta p_v = \begin{cases} p_s - p_x, & x_v \geq 0 \\ p_x - p_t, & x_v < 0, \end{cases} \tag{2}$$

wobei Stelldruck $p_s \geq p_x$ und Tankdruck $p_t \leq p_x$ konstante Drücke sind.

Der Ansteuerstrom $I$ bzw. die Ventilschieberposition $x_v$ bestimmt die Kolbenposition $x_k$ über folgende Dynamik:

$$\dot{x}_k = \frac{1}{A_k} q_v(x_v, \Delta p_v) = \frac{1}{A_k}\sqrt{\frac{2}{\rho_v}}\alpha_v A_v(x_v)\sqrt{\Delta p_v}. \tag{3}$$

Diese Dynamik ist von der Querschnittsfläche des Verstellzylinders, $A_k$, sowie weiteren Konstanten $\alpha_v$, $\rho_v$ abhängig. Außerdem hat die Druckdifferenz über die Ventile, $\Delta p_v$, direkten Einfluss auf die erste Ableitung der Verstellzylinderposition.

Zwischen der Kolbenposition $x_k$ und dem Schwenkwinkel $\alpha_p$ besteht aufgrund der mechanischen Kopplung ein bijektiver, algebraischer Zusammenhang, der beispielsweise über einen nichtlinearen Funktionszusammenhang oder ein Kennfeld gegeben sein kann:

$$\alpha_p = f(x_k) \text{ bzw. } x_k = f^{-1}(\alpha_p) \tag{4}$$

Schließlich ergibt sich der Differenzdruck über die Pumpe aus folgender Dyanmik:

$$\Delta \dot{p}_p = \frac{K}{V}(q_p(\alpha_p) - q_l(\Delta p_p)) = \frac{K}{V}(V_p \cdot \alpha_p \cdot \omega_p - q_l(\Delta p_p, \alpha_m, n_m)) \tag{5}$$

wobei $K$, $V$ und $V_p$ Konstanten sind, die Winkelgeschwindigkeit der Pumpe $\omega_p$ über die Pumpendrehzahl gemessen oder mittels Beobachter geschätzt werden kann und $q_l(\Delta p_p)$ ein Lastvolumenstrom darstellt, der beispielsweise vom Differenzdruck $\Delta p_p$ abhängt. Wird die Pumpe in einem hydrostatischen Getriebe eingesetzt, kann der Lastvolumenstrom auch von Schwenkwinkel $\alpha_m$ oder Drehzahl $n_m$ eines hydraulischen Motors abhängen.

Bei Axialkolbenpumpen in Schrägscheibenbauweise, wie beispielsweise in Figur 1 dargestellt, wird der Fördervolumenstrom mittels Verstellung des Schwenkscheibenwinkels, kurz Schwenkwinkel, eingestellt. Der Fördervolumenstrom beeinflusst im geschlossenen hydraulischen System den Differenzdruck bzw. Förderdruck $\Delta p_p$ über die Pumpe. Die Verstellung des Schwenkwinkels erfolgt über eine mechanische Kopplung der Schwenkscheibe an einen Differenzialzylinder. Dabei sind beide Kammern des Differenzialzylinders mit Druck beaufschlagbar. Der Kammerdruck wird über Proportional-Wegeventile mit Druckrückführung geregelt.

Je nach mechanischer Verstelleinrichtung und ggf. Sensorkonfiguration können für diese Pumpen verschiedene Funktionen realisiert werden. Ein Beispiel ist eine Geschwindigkeitssteuerung mit mechanischem Schwenkwinkelregler (laststeifer Betrieb). Hierfür wird der Schwenkwinkel der Schrägscheibe mechanisch über eine Feder auf das Proportional-Wegeventil zurückgeführt und somit innerhalb eines Regelbereiches gehalten. Ein anderes Beispiel ist eine elektronische Stelldrucksteuerung (lastfühliger Betrieb) ohne mechanische Rückführung des Schwenkwinkels auf das Regelventil. Mit der Erfindung können auch lastfühlige Pumpen im laststeifen Betrieb eingesetzt werden, ohne dass mechanische Anpassungen notwendig sind.

In Ausgestaltung der Erfindung kann hier für eine stelldruckgesteuerte Axialkolbenpumpe in Schwenkscheibenbauweise eine elektronische Vierquadrantenregelung des Differenzdrucks unter Berücksichtigung einer Schwenkwinkellimitierung bzw. eine Schwenkwinkelsteuerung unter Berücksichtigung einer Differenzdrucklimitierung realisiert werden. Zusätzlich können auch eine Stromlimitierung für die Proportional-Wegeventile berücksichtigt werden.

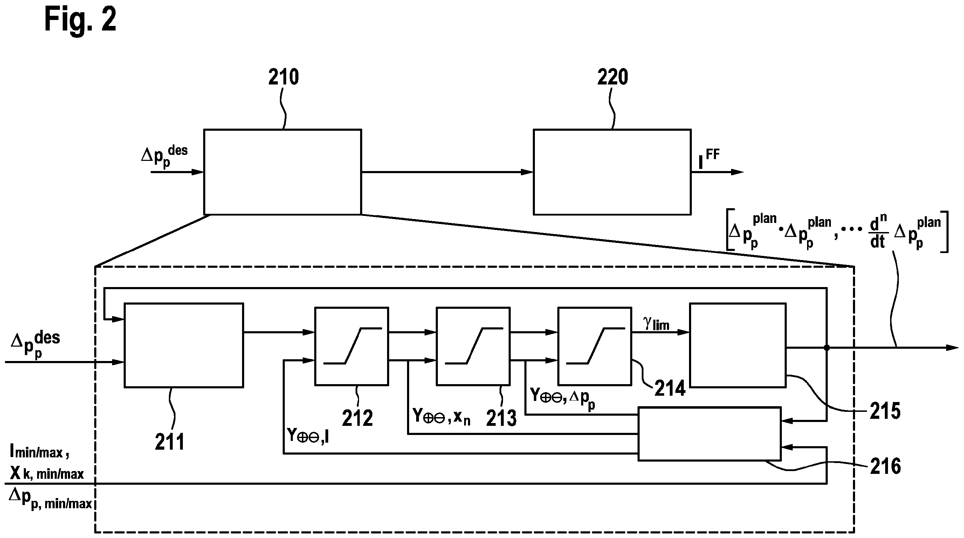

Dies wird in Ausgestaltung der Erfindung gemäß Figur 2 durch einen erweiterten Trajektorienfilter bzw. Zustandsvariablenfilter (eZVF) 210 für den Differenzdruck $\Delta p_p{}^{des}$ über die Pumpe als Sollwert geleistet, dessen Ausgang eine Trajektorie $\Delta p_p{}^{plan}$, die die vorhandenen Limitierungen einhält, und deren zeitliche Ableitungen $d/dt \dots (d/dt)^n$ sind. Das Einhalten der Limitierungen erfolgt hier durch kaskadierte, modellbasierte Beschränkungen 214, 213, 212 der höchsten (hier zweiten) Ableitung $z^{\cdot\cdot}{}_{ref}$ des Trajektorienfilters.

Werden Limitierungen in Strom $I$ (212), Schwenkwinkel bzw. Kolbenposition $x_k$ (213) oder Differenzdruck $\Delta p_p$ (214) erreicht, wird eine Differenzdrucktrajektorie erhalten, die die Limitierungen einhält. Die Reihenfolge der Limitierungen bestimmt die Priorität der korrespondierenden Beschränkungen. Wird keine Limitierung erreicht, wird die Differenzdruck-Referenztrajektorie jedenfalls über eine unbeschränkte, vom Anwender einstellbare, Filterdynamik 211 gefiltert.

Wenn obere und untere Grenze identisch der Referenztrajektorie folgen, wird diese Referenztrajektorie umgesetzt (solange nicht höher priorisierte Limitierungen diese überschreiben). So kann beispielsweise eine Schwenkwinkelsteuerung unter Berücksichtigung einer Differenzdrucklimitierung umgesetzt werden. Als obere und untere Grenze für den Schwenkwinkel wird dann die Schwenkwinkel-Referenztrajektorie vorgegeben. Diese Limitierungen werden die unbeschränkte Differenzdruck-Planung überschreiben und somit wird die vorgegebene Schwenkwinkel-Referenztrajektorie eindeutig umgesetzt, solange die DifferenzdruckLimitierung nicht verletzt wird.

Die Ventilschieberposition $x_v$ bestimmt die Verstellzylinderposition $x_k$. Im Folgenden wird hier von einer nichtlinearen Dynamik erster Ordnung ausgegangen. Zusätzlich zur Ventilschieberposition hat die Druckdifferenz $\Delta p_x$ über die Ventile direkten Einfluss auf die erste Ableitung der Verstellzylinderposition.

Zwischen der Verstellzylinderposition $x_k$ und dem Schwenkwinkel $\alpha_p$ besteht aufgrund der mechanischen Kopplung ein bijektiver, algebraischer Zusammenhang, der beispielsweise über einen nichtlinearen Funktionszusammenhang oder ein Kennfeld gegeben sein kann. Aufgrund der mechanischen Kopplung gilt für diesen Zusammenhang auch, dass eine Beschränkung der Verstellzylinderposition $x_k$ zu einer Beschränkung des Schwenkwinkels $\alpha_p$ führt.

Der Schwenkwinkel, die Winkelgeschwindigkeit der Pumpe, die über die Pumpendrehzahl gemessen oder mittels Beobachter geschätzt werden kann, und ein möglicher Lastvolumenstrom bestimmen unter anderem den Differenzdruck über die Pumpe. Hier wird im Folgenden von einer nichtlinearen Dynamik erster Ordnung ausgegangen. Der Lastvolumenstrom kann beispielsweise vom Differenzdruck abhängen, aber bei Einsatz in einem hydrostatischen Getriebe auch von Schwenkwinkel oder Drehzahl eines hydraulischen Motors.

Basierend auf diesem dynamischen Modell kann der eZVF 210 berechnet werden. Das Modell ist flach im realen Ausgang $\Delta p_p$. Deshalb wird im Folgenden der reale Ausgang $y = \Delta p_p$ identisch zum flachen Ausgang gewählt. Somit ist keine Nulldynamik im Modell vorhanden.

Jedoch ist es möglich, die Erfindung auch einzusetzen, wenn eine stabile Nulldynamik vorhanden ist. In diesem Fall muss zur Umplanung der Führungsgröße von $y$ auf den flachen Ausgang eine stabile Differentialgleichung gelöst werden, siehe auch Joos, S., Bitzer, M., Karrelmeyer, R., & Graichen, K. (2017). Online-trajectory planning for state- and input-constrained linear SISO systems using a switched state variable filter. IFAC-PapersOnLine, 50(1), 2639-2644.

Das vereinfachte, nichtlineare Modell der AKP ergibt sich unter Verwendung der Gleichungen (3), (4) und (5) in flachen Koordinaten zu:

$$\Delta \dot{p}_p = \frac{K}{V}(V_p \cdot \alpha_p \cdot \omega_p - q_l(\Delta p_p)) = \frac{K}{V}(V_p \cdot f(x_k) \cdot \omega_p - q_l(\Delta p_p)) \tag{6}$$

$$\Delta \ddot{p}_p = \frac{K}{V}\left(V_p \cdot (\dot{\alpha}_p \cdot \omega_p + \alpha_p \cdot \dot{\omega}_p) - \dot{q}_l(\Delta p_p)\right) = \frac{K}{V}\left(V_p \cdot \left(\frac{\partial}{\partial x_k}f(x_k)\dot{x}_k \cdot \omega_p + \alpha_p \cdot \dot{\omega}_p\right) - \dot{q}_l(\Delta p_p)\right)$$

$$= \frac{K}{V}\left(V_p \cdot \left(\frac{\partial}{\partial x_k}f(x_k) \cdot \frac{1}{A_k}\sqrt{\frac{2}{\rho_v}}\alpha_v A_v(x_v)\sqrt{\Delta p_v} \cdot \omega_p + \alpha_p \cdot \dot{\omega}_p\right) - \dot{q}_l(\Delta p_p)\right). \tag{7}$$

Die partielle Ableitung $\dfrac{\partial}{\partial x_k}f\left(x_k\right)$ kann entweder analytisch oder, bei Vorliegen eines Kennfeldes, numerisch berechnet werden. Die Zustände des Systems in flachen Koordinaten sind durch den Vektor $\Delta p_p = [\Delta p_p; \Delta \dot{p}_p]$ gegeben. Das Modell der AKM in flachen Koordinaten besteht dann aus der Dynamik des Differenzdrucks und der ersten zeitlichen Ableitung der Differenzdruckdynamik. Hierfür wird auch die Dynamik für die Verstellzylinderposition benötigt.

Eine dynamische Vorsteuerung für die AKM kann direkt aus Inversion der Modellgleichungen (6), (7) in flachen Koordinaten angegeben werden. Die zur Realisierung dieser Vorsteuerung benötigten Trajektorien $\Delta p_{ref}$, $\Delta \dot{p}_{ref}$, $\Delta \ddot{p}_{ref}$ ($= z_{ref}$, $\dot{z}_{ref}$, $\ddot{z}_{ref}$) können mit Hilfe eines Zustandsvariablenfilters (ZVF) 211 generiert werden, welcher beispielsweise als Verzögerungsglied zweiter Ordnung implementiert werden kann. Die Dynamik des ZVF kann beispielsweise über eine Filterzeitkonstante vorgegeben werden.

Um Zustands- und Stellgrößenbeschränkungen bei der Ansteuerung der AKM einhalten zu können, müssen diese Beschränkungen in den geplanten Trajektorien berücksichtigt werden. Dazu wird der ZVF dahingehend erweitert, dass der Eingang $\Delta \ddot{p}_{ref}$ der Filterintegratorkette 215 dynamisch beschränkt wird. Für jede k-te Beschränkung wird eine Grenze $\gamma_k$ in 216 berechnet und über ein dynamisches Beschränkungsglied 212, 213, 214 auf $\Delta \ddot{p}_{ref}$ aufgeschaltet.

Die Integratorkette 215 weist eine Anzahl n von Integratoren auf, um aus der beschränkten (n)-Ableitung $\gamma_{Lim}(t)$ (n ist die Ordnung des Systems) durch n-faches Aufintegrieren den flachen Ausgang zu erhalten. Dabei handelt es sich um den Sollwert für den flachen Ausgang $\Delta p_p^{plan}$ (und dessen Zeitableitungen), die u.a. zur Realisierung der flachen Vorsteuerung benötigt werden.

Liegen Beschränkungen in Form von sog. Box-Constraints für eine Stellgröße oder einen Zustand vor, können die Grenzen $\gamma_k$ für die obere und untere Beschränkung zu einem Paar von Grenzen $\gamma_{\oplus,k}$; $\gamma_{\ominus,k}$ zusammen gefasst werden. Ein Box-Constraint liegt vor, wenn es für jede Variable $x_i$ eine obere und untere, möglicherweise zeitvariante Beschränkung gibt, d.h. für alle $x_i$ gilt $x_{i,min} \le x_i \le x_{i,max}$. Für die AKM liegen alle Beschränkungen in Form von Box-Constraints vor, so dass diese immer paarweise in 216 berechnet werden können.

Die Grenze für ein flaches System mit Systemordnung n und Zustand $z$ und einer Box-Constraint-Beschränkung $f^T z - z_{i,lim} \le 0$, wobei $f$ lediglich für ein Element ungleich 0, lautet dann:

$$\gamma_{lim} = \frac{r(\xi)}{f(\xi)} \cdot z_{\xi,lim} - [0, ..., 0, r(\xi), ..., r(n)]^T z,$$

wobei $r(\bar{\xi})$, ..., $r(n)$ Tuningparameter darstellen. Um die Variable $\bar{\xi}$ zu bestimmen, muss aus allen Zuständen, von denen die Beschränkung $f^T z - z_{i,lim} \le 0$ direkt abhängt, derjenige mit minimalem relativen Grad ermittelt werden. Die Variable $\bar{\xi}$ ist dann der zu diesem Zustand zugehörige Index. Für eine detailliertere Beschreibung sei auf Joos, S.; Bitzer, M.; Karrelmeyer, R.; Graichen, K.: Prioritization-based switched feedback control for linear SISO systems with time-varying state and input constraints. Proc. European Control Conference, p. 2935-2940, 2018, verwiesen.

Die Reihenfolge der Beschränkungsglieder bestimmt die Priorität der einzelnen Beschränkungen. Typischerweise werden Stellgrößenbeschränkungen am höchsten priorisiert, d.h. das korrespondierende Beschränkungsglied wird an letzter Stelle platziert. Somit wird die Realisierbarkeit des Vorsteuersignals durch den Aktuator sichergestellt.

Zur Berücksichtigung (212) der Beschränkungen des Ansteuerstroms $I_{min} \le I \le I_{max}$ werden diese mit Hilfe der Kräftebilanz (1) zunächst als Beschränkungen der Ventilschieberposition dargestellt, d.h. $I_{min}$ führt zu einem $x_{v;min}$ und $I_{max}$ zu einem $x_{v;max}$. Sollte keine analytische Auflösung der Kräftebilanz (1) nach $x_v$ möglich sein, kann dies z.B. über eine Nullstellensuche erfolgen. Die dynamischen Grenzen zur Berücksichtigung der Stellgrößenbeschränkung, $\gamma_{\oplus,I}$ und $\gamma_{\ominus,I}$, ergeben sich durch Einsetzen von $x_v = x_{v;min/max}$ in die höchste Ableitung.

$$\gamma_{\ominus,I}(\Delta \boldsymbol{p}_p, x_{v,min})) = \frac{K}{V} \left( V_p \cdot \left( \frac{\partial}{\partial x_k} f(x_k) \cdot \frac{1}{A_k} \sqrt{\frac{2}{\rho_v}} \alpha_v A_v(x_{v,min}) \sqrt{\Delta p_v} \cdot \omega_p + f(x_k) \cdot \dot{\omega}_p \right) - \dot{q}_l(\Delta p_p) \right) \qquad (8)$$

$$\gamma_{\oplus,I}(\Delta \boldsymbol{p}_p, x_{v,max})) = \frac{K}{V} \left( V_p \cdot \left( \frac{\partial}{\partial x_k} f(x_k) \cdot \frac{1}{A_k} \sqrt{\frac{2}{\rho_v}} \alpha_v A_v(x_{v,max}) \sqrt{\Delta p_v} \cdot \omega_p + f(x_k) \cdot \dot{\omega}_p \right) - \dot{q}_l(\Delta p_p) \right). \qquad (9)$$

Die benötigte Kolbenposition $x_k$ ergibt sich durch Auflösen von (6) nach $\alpha_p$ und unter Verwendung von (4) zu

$$x_k = f^{-1}(\alpha_p) = f^{-1}\left( \frac{1}{V_p \cdot \omega_p} \cdot \left( q_l(p_p) + \frac{V}{K} \Delta \dot{p}_p \right) \right). \qquad (10)$$

Die dynamischen Grenzen $\gamma_{\oplus,xk}$; $\gamma_{\ominus,xk}$ zur Berücksichtigung (213) der geometrischen Beschränkung der Ver-

stellzylinderposition $x_{k;min} \leq x_k \leq x_{k;max}$ ergeben sich aus der ersten Ableitung des flachen Ausgangs, d.h. $\overline{\xi} = 2$ und (6) zu

$$\dot{p}_{p,min}(x_{k,min}) = \frac{K}{V}\left(V_p \cdot f(x_{k,min}) \cdot \omega_p - q_l(\Delta p_p)\right) \tag{11}$$

$$\dot{p}_{p,max}(x_{k,max}) = \frac{K}{V}\left(V_p \cdot f(x_{k,max}) \cdot \omega_p - q_l(\Delta p_p)\right). \tag{12}$$

Die Funktionen zur Limitierung der höchsten Ableitung, in diesem Fall z", lauten dann:

$$\gamma_{\ominus,x_k}(\Delta \boldsymbol{p}_p, x_{k,min}) = r_{\ominus,x_k} \cdot (\Delta \dot{p}_{p,min}(x_{k,min}) - \Delta \dot{p}_p) \tag{13}$$

$$\gamma_{\oplus,x_k}(\Delta \boldsymbol{p}_p, x_{k,max}) = r_{\oplus,x_k} \cdot (\Delta \dot{p}_{p,max}(x_{k,max}) - \Delta \dot{p}_p). \tag{14}$$

Somit gibt es je einen Tuningparameter, $r_{\oplus,xk}$ und $r_{\ominus,xk}$. Diese beeinflussen, wie hart die Trajektorie in den Anschlag geplant wird und sind pumpenspezifisch in Abhängigkeit von der verfügbaren Stellgrößenreserve einzustellen.

Zusätzlich soll der Differenzdruck über die Pumpe auf das Intervall $\Delta p_{p;min} \leq \Delta p_p \leq \Delta p_{p;max}$ beschränkt werden (214). Hier ist f = 1 und somit hängen $\gamma_{\ominus,\Delta pp}$ und $\gamma_{\oplus,,\Delta pp}$ jeweils von einem Parametervektor $r_{\ominus,\Delta p} = [r_{\ominus,,\Delta pp}(1); r_{\ominus,,\Delta pp}(2)]$ bzw. $r_{\oplus,,\Delta pp} = [r_{\oplus,,\Delta pp}(1); r_{\oplus,,\Delta pp}(2)]$ ab. Die Funktionen zur Einhaltung dieser Beschränkung ergeben sich zu:

$$\gamma_{\ominus,\Delta p_p}(\Delta \boldsymbol{p}_p, \Delta p_{p,min}) = r_{\ominus,\Delta p_p}(1) \cdot (\Delta p_{p,min} - \Delta p_p) - r_{\ominus,\Delta p_p}(2) \cdot \Delta \dot{p}_p \tag{15}$$

$$\gamma_{\oplus,\Delta p_p}(\Delta \boldsymbol{p}_p, \Delta p_{p,max}) = r_{\oplus,\Delta p_p}(1) \cdot (\Delta p_{p,max} - \Delta p_p) - r_{\oplus,\Delta p_p}(2) \cdot \Delta \dot{p}_p. \tag{16}$$

Hierzu sei auch auf Joos, S. ; Bitzer, M. ; Karrelmeyer, R. ; Graichen, K. : Prioritization-based switched feedback control for linear SISO systems with time-varying state and input constraints. In: Proceedings European Control Conference, Limassol, Cyprus, 2018, S. 2935-2940, verwiesen.

Die resultierenden Grenzen entsprechen damit einer Integratorkette zweiter Ordnung, dessen Zustand $[\Delta p_{p,max}\text{-}\Delta p_p, \Delta \dot{p}_p]$ bzw. $[\Delta p_{p,min}\text{-}\Delta p_p, \Delta \dot{p}_p]$ mittels der Tuningparameter stabilisiert wird. Je schneller/langsamer die Pole und damit die Tuningparameter $[r_{,\Delta pp}(1); r_{,\Delta pp}(2)]$ zur Berechnung in 216 gewählt werden, um so später/früher und stärker/schwächer wird das System auf die Differenzdruckbeschränkung gezogen. Die Tuningparameter sind pumpenspezifisch in Abhängigkeit von der verfügbaren Stellgrößenreserve einzustellen.

Eine flachheitsbasierte Vorsteuerung 220 ermittelt aus dem Sollwert $,\Delta p_p$ für den Förder- bzw. Pumpendruck einen Sollwert $I^{FF}$ für den Ventilstrom. Dem liegt ein dynamisches Streckenmodell mit Ansteuerstrom als Eingang und Differenzdruck als Ausgang zugrunde.

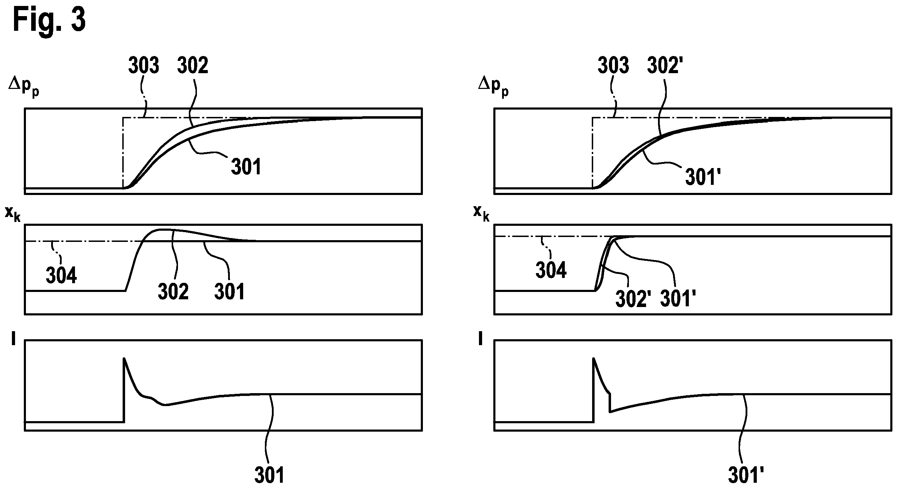

Der qualitative Verlauf der beschränkten Ansteuerung und das dazugehörige Verhalten der gesteuerten AKM im Vergleich zu deren Verhalten bei unbeschränkter Ansteuerung sind in Figur 3 dargestellt. Figur 3 zeigt qualitative Gegenüberstellung verschiedener Trajektorien für die zu steuernde Größe Differenzdruck $,\Delta p_p,$ einen internen beschränkten Systemzustand Schwenkwinkel bzw. Kolbenposition $x_k$ sowie die Stellgröße Strom $I$.

Wird eine AKM auf Basis der unbeschränkten Referenztrajektorie 303 durch den Stand der Technik nach Maßgabe einer auf nicht-erfindungsgemäße Weise erzeugten bzw. geplanten Sollwert-Trajektorie 302 angesteuert, siehe linkes Bild, so wird man für Differenzdruck $,\Delta p_p$ und Kolbenposition $x_k$ jeweils den Verlauf 301 am System messen. Das System kann der geplanten Trajektorie 302 aufgrund der nicht berücksichtigten Beschränkung 304 der Kolbenposition nicht genau folgen.

Im Vergleich dazu ist die durch die Erfindung umgeplante Ansteuertrajektorie 302', siehe rechtes Bild, durch das System realisierbar, d.h. geplante 302' und Ist-Trajektorie 301' liegen fast exakt übereinander.

**Patentansprüche**

1.  Verfahren zum Erzeugen einer vorgegebenen Beschränkungen genügenden Sollwerttrajektorie ($\Delta p_p^{plan}$) für eine

hydraulische Maschine (100) mit einem Aktor (130) zur Beeinflussung einer Ausgangsgröße ($\Delta p_p$) der hydraulischen Maschine (100),

wobei eine Trajektorie unbeschränkter Sollwerte ($\Delta p_p^{des}$) einer Trajektorienplanung (210) zugeführt wird, welche aus der Trajektorie unbeschränkter Sollwerte ($\Delta p_p^{des}$) die Sollwerttrajektorie ($\Delta p_p^{plan}$) erzeugt, wobei in der Trajektorienplanung (210) die Trajektorie unbeschränkter Sollwerte ($\Delta p_p^{des}$) wenigstens n-mal differenziert wird, um eine n-mal differenzierte Trajektorie ($z^{..}_{ref}$) unbeschränkter Sollwerte zu erhalten mit n ≥ 2, wobei in der Trajektorienplanung (210) wenigstens eine Beschränkung (212, 213, 214) auf die n-mal differenzierte Trajektorie ($z^{..}_{ref}$) unbeschränkter Sollwerte angewandt wird, um eine n-mal differenzierte Trajektorie ($\gamma_{Lim}$) beschränkter Sollwerte zu erhalten, und die n-mal differenzierte Trajektorie ($\gamma_{Lim}$) beschränkter Sollwerte einer Filterintegratorkette (215) zugeführt wird, um die Sollwerttrajektorie ($\Delta p_p^{plan}$) zu erhalten, **dadurch gekennzeichnet, dass** die wenigstens eine Beschränkung (212, 213, 214) eine Beschränkung (213) in Abhängigkeit von einem Stellbereich des Aktors umfasst.

2. Verfahren nach Anspruch 1, wobei die wenigstens eine Beschränkung (212, 213, 214) eine Stellgrößenbeschränkung (212) und/oder eine Beschränkung (214) des Sollwerts ($\Delta p_p$) umfasst.

3. Verfahren nach Anspruch 1 oder 2, wobei die hydraulische Maschine (100) eine Schrägscheiben- oder Schrägachsenmaschine ist und die Beschränkung (213) in Abhängigkeit von einem Stellbereich des Aktors eine Beschränkung eines Schwenkwinkels auf einen Wert zwischen einem Minimalwert und einem Maximalwert umfasst.

4. Verfahren nach einem der vorstehenden Ansprüche, wobei die Beschränkung (213) in Abhängigkeit von einem Stellbereich des Aktors eine Beschränkung auf einen Wert zwischen einem Minimalwert und einem mit dem Minimalwert identischen Maximalwert umfasst.

5. Verfahren nach Anspruch 4, wobei ein Sollwert als Minimalwert und mit dem Minimalwert identischer Maximalwert vorgeben wird.

6. Verfahren nach einem der vorstehenden Ansprüche, wobei der Aktor (130) einen hydraulischen Verstellzylinder mit einem beweglichen Kolben (131) umfasst.

7. Verfahren nach einem der vorstehenden Ansprüche, wobei der Aktor (130) ein elektrisch ansteuerbares Ventil (132, 134) umfasst.

8. Verfahren nach Anspruch 7, wobei die wenigstens eine Beschränkung (212, 213, 214) eine Stellgrößenbeschränkung (212) umfasst, und die Stellgrößenbeschränkung (214) eine Magnetkraftbeschränkung oder eine Ansteuerstrombeschränkung des elektrisch ansteuerbaren Ventils (132, 134) auf einen Wert zwischen einem Minimalwert und einem Maximalwert umfasst.

9. Verfahren nach Anspruch 7 oder 8, wobei die Beschränkung (213) in Abhängigkeit von einem Stellbereich des Aktors eine Beschränkung einer Ventilschieberposition ($x_k$) auf einen Wert zwischen einem Minimalwert und einem Maximalwert umfasst.

10. Verfahren nach einem der vorstehenden Ansprüche, wobei die wenigstens eine Beschränkung (212, 213, 214) eine untere Grenze und/oder eine obere Grenze umfasst, wobei die obere Grenze vorzugsweise unterschiedlich zur unteren Grenze ist.

11. Verfahren nach einem der vorstehenden Ansprüche, wobei die Sollwerttrajektorie ($\Delta p_p^{plan}$) einer flachheitsbasierten Vorsteuerung (220) zugeführt wird, welche daraus eine Stellgrößentrajektorie ($I^{FF}$) für den Aktor (130) erzeugt.

12. Verfahren nach einem der vorstehenden Ansprüche, wobei die hydraulische Maschine eine Pumpe und der Sollwert ein Förderdruck der Pumpe ist.

13. Recheneinheit, die dazu eingerichtet ist, ein Verfahren nach einem der vorstehenden Ansprüche durchzuführen.

14. Computerprogramm, das eine Recheneinheit veranlasst, ein Verfahren nach einem der Ansprüche 1 bis 12 durchzuführen, wenn es auf der Recheneinheit ausgeführt wird.

**15.** Maschinenlesbares Speichermedium mit einem darauf gespeicherten Computerprogramm nach Anspruch 14.

**Claims**

**1.** Method for generating a setpoint trajectory ($\Delta p_p^{plan}$) which satisfies predetermined limitations for a hydraulic machine (100) with an actuator (130) for influencing an output variable ($\Delta p_p$) of the hydraulic machine (100),

wherein a trajectory of unlimited setpoints ($\Delta p_p^{des}$) is supplied to a trajectory planning function (210), which generates the setpoint trajectory ($\Delta p_p^{plan}$) from the trajectory of unlimited setpoints ($\Delta p_p^{des}$),
wherein in the trajectory planning (210) the trajectory of unlimited setpoints ($\Delta p_p^{des}$) is differentiated at least n times in order to obtain an n-times differentiated trajectory ($z^{..}_{ref}$) of unlimited setpoints with n $\geq$ 2,
wherein in the trajectory planning (210) at least one limitation (212, 213, 214) is applied to the n-times differentiated trajectory ($z^{..}_{ref}$) of unlimited setpoints in order to obtain an n-times differentiated trajectory ($\gamma_{Lim}$) of limited setpoints, and the n-times differentiated trajectory ($\gamma_{Lim}$) of limited setpoints is supplied to a filter integrator chain (215) to obtain the setpoint trajectory ($\Delta p_p^{plan}$),
**characterized in that** the at least one limitation (212, 213, 214) includes a limitation (213) as a function of a control range of the actuator.

**2.** Method according to Claim 1, wherein the at least one limitation (212, 213, 214) includes a control variable limitation (212) and/or a limitation (214) of the setpoint ($\Delta p_p$).

**3.** Method according to Claim 1 or 2, wherein the hydraulic machine (100) is a pivoting plate or bent axis machine, and the limitation (213) includes a limitation of a pivot angle to a value between a minimum value and a maximum value depending on a control range of the actuator.

**4.** Method according to any one of the preceding claims, wherein the limitation (213) includes a limitation to a value between a minimum value and a maximum value identical to the minimum value depending on a control range of the actuator.

**5.** Method according to Claim 4, wherein a setpoint is specified as the minimum value and a maximum value identical to the minimum value.

**6.** Method according to any one of the preceding claims, wherein the actuator (130) comprises a hydraulic adjustment cylinder with a movable piston (131).

**7.** Method according to any one of the preceding claims, wherein the actuator (130) comprises an electrically controllable valve (132, 134).

**8.** Method according to Claim 7, wherein the at least one limitation (212, 213, 214) includes a control variable limitation (212), and the control variable limitation (214) includes a magnetic force limitation or a control current limitation of the electrically controllable valve (132, 134) to a value between a minimum value and a maximum value.

**9.** Method according to Claim 7 or 8, wherein the limitation (213) includes a limitation of a valve slider position ($x_k$) to a value between a minimum value and a maximum value depending on a control range of the actuator.

**10.** Method according to any one of the preceding claims, wherein the at least one limitation (212, 213, 214) includes a lower limit and/or an upper limit, wherein the upper limit is preferably different from the lower limit.

**11.** Method according to any one of the preceding claims, wherein the setpoint trajectory ($\Delta p_p^{plan}$) is supplied to a flatness-based pilot control (220), which produces therefrom a control variable trajectory ($I^{FF}$) for the actuator (130).

**12.** Method according to any one of the preceding claims, wherein the hydraulic machine is a pump and the setpoint is a delivery pressure of the pump.

**13.** Computing unit that is configured to carry out a method according to any one of the preceding claims.

**14.** Computer program that causes a computing unit to carry out a method according to any one of Claims 1 to 12 when it is executed on the computing unit.

**15.** Machine-readable storage medium with a computer program according to Claim 14 stored thereon.

## Revendications

**1.** Procédé pour générer une trajectoire de valeurs de consigne ($\Delta p_p^{plan}$) qui satisfait à des limitations prédéterminées pour une machine hydraulique (100) comprenant un actionneur (130) destiné à influencer une grandeur de sortie ($\Delta p_p$) de la machine hydraulique (100), une trajectoire de valeurs de consigne non limitées ($\Delta p_p^{des}$) étant acheminée à une planification de trajectoire (210), laquelle génère la trajectoire de valeurs de consigne ($\Delta p_p^{plan}$) à partir de la trajectoire de valeurs de consigne non limitées ($\Delta p_p^{des}$),

la trajectoire de valeurs de consigne non limitées ($\Delta p_p^{des}$) étant différenciée au moins n fois dans la planification de trajectoire (210) afin d'obtenir une trajectoire différenciée n fois ($\ddot{z}_{ref}$) de valeurs de consigne non limitées avec n $\geq$ 2,
au moins une limitation (212, 213, 214) étant appliquée dans la planification de trajectoire (210) à la trajectoire différenciée n fois ($\ddot{z}_{ref}$) de valeurs de consigne non limitées afin d'obtenir une trajectoire différenciée n fois ($\gamma_{Lim}$) de valeurs de consigne limitées, et la trajectoire différenciée n fois ($\gamma_{Lim}$) de valeurs de consigne limitées étant acheminée à une chaîne d'intégrateurs de filtre (215) afin d'obtenir la trajectoire de valeurs de consigne ($\Delta p_p^{plan}$),
**caractérisé en ce que** l'au moins une limitation (212, 213, 214) comprend une limitation (213) en fonction d'une plage de réglage de l'actionneur.

**2.** Procédé selon la revendication 1, l'au moins une limitation (212, 213, 214) comprenant une limitation de grandeur de réglage (212) et/ou une limitation (214) de la valeur de consigne ($\Delta p_p$).

**3.** Procédé selon la revendication 1 ou 2, la machine hydraulique (100) étant une machine à plateau oscillant ou à axe incliné et la limitation (213) comprenant, en fonction d'une plage de réglage de l'actionneur, une limitation d'un angle de pivotement à une valeur comprise entre une valeur minimale et une valeur maximale.

**4.** Procédé selon l'une des revendications précédentes, la limitation (213) comprenant, en fonction d'une plage de réglage de l'actionneur, une limitation à une valeur comprise entre une valeur minimale et une valeur maximale identique à la valeur minimale.

**5.** Procédé selon la revendication 4, une valeur de consigne étant prédéfinie en tant que valeur minimale, ainsi qu'une valeur maximale identique à la valeur minimale.

**6.** Procédé selon l'une des revendications précédentes, l'actionneur (130) comprenant un vérin de positionnement hydraulique pourvu d'un piston mobile (131).

**7.** Procédé selon l'une des revendications précédentes, l'actionneur (130) comprenant une vanne (132, 134) pouvant être commandée électriquement.

**8.** Procédé selon la revendication 7, l'au moins une limitation (212, 213, 214) comprenant une limitation de grandeur de réglage (212), et la limitation de grandeur de réglage (214) comprenant une limitation de force magnétique ou une limitation de courant d'attaque de la vanne (132, 134) pouvant être commandée électriquement à une valeur comprise entre une valeur minimale et une valeur maximale.

**9.** Procédé selon la revendication 7 ou 8, la limitation (213) comprenant, en fonction d'une plage de réglage de l'actionneur, une limitation d'une position de tiroir de vanne ($x_k$) à une valeur comprise entre une valeur minimale et une valeur maximale.

**10.** Procédé selon l'une des revendications précédentes, l'au moins une limitation (212, 213, 214) comprenant une limite inférieure et/ou une limite supérieure, la limite supérieure étant de préférence différente de la limite inférieure.

**11.** Procédé selon l'une des revendications précédentes, la trajectoire de valeurs de consigne ($\Delta p_p^{plan}$) étant acheminée à une commande pilote (220) basée sur la planéité, laquelle génère à partir de celle-ci une trajectoire de grandeur

de commande ($I^{FF}$) pour l'actionneur (130).

12. Procédé selon l'une des revendications précédentes, la machine hydraulique étant une pompe et la valeur de consigne est une pression de refoulement de la pompe.

13. Unité de calcul, qui est conçue pour mettre en œuvre un procédé selon l'une des revendications précédentes.

14. Programme informatique, qui amène une unité de calcul à mettre en œuvre un procédé selon l'une des revendications 1 à 12 lorsqu'il est exécuté sur l'unité de calcul.

15. Support de stockage lisible par machine sur lequel est enregistré un programme informatique selon la revendication 14.

# Fig. 1

# Fig. 2

$$\left[ \Delta p_p^{plan} \cdot \Delta p_p^{plan}, \cdots \frac{d^n}{dt} \Delta p_p^{plan} \right]$$

EP 3 997 527 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018114047 A1
- DE 102014224337 A1
- DE 102013208869 A1
- DE 102015222988 A1

**In der Beschreibung aufgeführte Nicht-Patentliteratur**

- **KARRELMEYER, R. ; GRAICHEN, K.** Online-trajectory planning for state-and input-constrained linear SISO systems using a switched state variable filter. *IFAC-PapersOnLine,* 2017, vol. 50 (1), 2639-2644
- **JOOS, S ; BITZER, M ; KARRELMEYER, R ; GRAICHEN, K.** Prioritization-based switched feedback control for linear SISO systems with time-varying state and input constraints. *Proc. European Control Conference,* 2018, 2935-2940
- **JOOS, S. ; BITZER, M ; ; KARRELMEYER, R ; GRAICHEN, K.** Prioritization-based switched feedback control for linear SISO systems with time-varying state and input constraints. *In: Proceedings European Control Conference,* 2018, 2935-2940